# EUROPEAN PATENT APPLICATION

(11) **EP 2 284 940 A1**
(43) Date of publication of application: **16.02.2011**
(21) Application number: 09758076.5
(22) Date of filing: 29.05.2009
(51) Int. Cl.: H01M 10/42, H01M 4/58, H01M 10/48, H02J 7/00, H02J 7/02

(54) **IMBALANCE IDENTIFYING CIRCUIT, POWER SOURCE APPARATUS AND IMBALANCE IDENTIFICATION METHOD**

(30) Priority: 02.06.2008 JP 2008144906
(71) Applicant: Panasonic Corporation, Kadoma-shi Osaka 571-8501 (JP)
(72) Inventor: IIDA, Takuma c/o Panasonic Corporation, Shiromi 2-chome Chuo-ku, Osaka-shi Osaka 540-6207 (JP); TANIGUCHI, Akihiro c/o Panasonic Corporation, Shiromi 2-chome Chuo-ku, Osaka-shi Osaka 540-6207 (JP); NAKASHIMA, Takuya c/o Panasonic Corporation, Shiromi 2-chome Chuo-ku, Osaka-shi Osaka 540-6207 (JP)
(74) Representative: Schwabe - Sandmair - Marx
(86) International application number: PCT/JP2009/002393
(87) International publication number: WO 2009/147809

(57) **Abstract**

Provided is an imbalance identifying circuit, including: a voltage detection unit for detecting a terminal voltage in each of a plurality of accumulators; a gradient acquisition unit for performing gradient information acquisition processing of suspending charge when the plurality of accumulators are being charged and acquiring, from each of the terminal voltages detected by the voltage detection unit during the suspension of charge, voltage gradient information showing an amount of change per predetermined time of each of the terminal voltages; and an imbalance identification unit for identifying whether an imbalance of the amount of charge in the plurality of accumulators has occurred by using a plurality of pieces of voltage gradient information corresponding to each of the terminal voltages acquired by the gradient acquisition unit.

## Description

### Technical Field

The present invention relates to an imbalance identifying circuit, a power source apparatus, and an imbalance identification method for identifying whether an imbalance of the amount of charge in a plurality of accumulators has occurred.

### Background Art

Recently, electric storage devices such as secondary batteries are being combined with solar batteries and power generation devices and being widely used as an electrical power system. A power generation device is driven by natural energy such as wind power or water power, or artificial energy such as natural energy and internal combustion. An electrical power system configured by combining the foregoing electric storage devices endeavors to improve the energy efficiency by accumulating surplus energy in the electric storage devices, and supplying power from the electric storage devices when the loading device needs power.

As an example of this type of system, there is a solar energy generation system. A solar energy generation system charges the electric storage devices using surplus power if the electric power generation based on sunlight is greater in comparison to the power consumption of the loading device. Contrarily, if the electric power generation is smaller than the power consumption of the loading device, the solar energy generation system drives the loading device by outputting power from the electronic storage device to compensate for the insufficient power.

As described above, since a solar energy generation system is able to accumulate surplus power, which was not utilized conventionally, in the electric storage devices, the energy efficiency can be improved in comparison to an electrical power system that does not use electric storage devices.

With this kind of solar energy generation system, surplus power cannot be charged if the electric storage devices are fully charged, and loss will arise. Thus, in order to efficiently charge the surplus power in the electric storage devices, charge control is being performed so that the State of Charge (hereinafter "SOC") of the secondary battery will not become 100%. In addition, charge control is also being performed so that the SOC will not become 0 (zero) % so that the loading device can be driven when necessary. Specifically, under normal circumstances, charge control is performed so that the SOC of the electric storage devices shifts within the range of 20% to 80%.

In addition, a Hybrid Electric Vehicle (hereinafter "HEV") that uses an engine and a motor also uses the foregoing principle. An HEV drives the dynamo with surplus engine power and charges the electric storage device if the power from the engine is great in relation to the power that is required for driving. Meanwhile, an HEV charges the electric storage device by using the motor as the dynamo during the braking or deceleration of the vehicle.

Furthermore, load leveling power sources and plug-in hybrid vehicles that utilize nighttime power are also attracting attention. A load leveling power source is a system with low power consumption, stores power in the electric storage device at night when the electricity cost is low, and utilizes the stored power during the day when the power consumption reaches its peak. The objective of a load leveling power source is to even out the electric power generation by leveling the power consumption, and contribute to the efficient operation of power systems and reduction of business investment.

Moreover, the objective of a plug-in hybrid vehicle is to leverage nighttime power and reduce the total CO₂ emission as a result of mainly using the EV drive mode in which power is supplied from the electric storage device when driving through an urban area where mileage is poor, and using the HEV drive mode utilizing an engine and motor when driving long distance.

Meanwhile, this kind of electric storage device is configured by serially connecting a plurality of storage elements (electrical cells or the like) in order to obtain the intended power voltage. With this kind of storage element, if deep discharge is performed in a state where the accumulated charge in the individual storage elements varies, a storage element with low accumulated charge will be overdischarged, and that storage element will deteriorate and cause the life of the overall electric storage device to also deteriorate.

In order to inhibit this kind of deterioration of the life of the electric storage device, technology is known for using an equalization means, if a variation occurs in the accumulated charge (SOC), and eliminating such variation in the accumulated charge. As such equalization means, disclosed is a method of comparing the minimum voltage and the terminal voltage of the respective storage elements, and performing equalization if the voltage difference exceeds a predetermined value (for instance, refer to Patent Document 1).

Nevertheless, with the method disclosed in Patent Document 1, since the equalization means compares the minimum voltage and the terminal voltage of the respective storage elements and performs equalization if the voltage difference becomes a predetermined value or higher, with a storage element having characteristics in which the change of the OCV (Open Circuit Voltage: open voltage) in relation to the change of SOC is small, since the accumulated charge is not reflected in the voltage difference, the detection accuracy of variation in the accumulated charge will deteriorate with the detection based on the voltage difference.

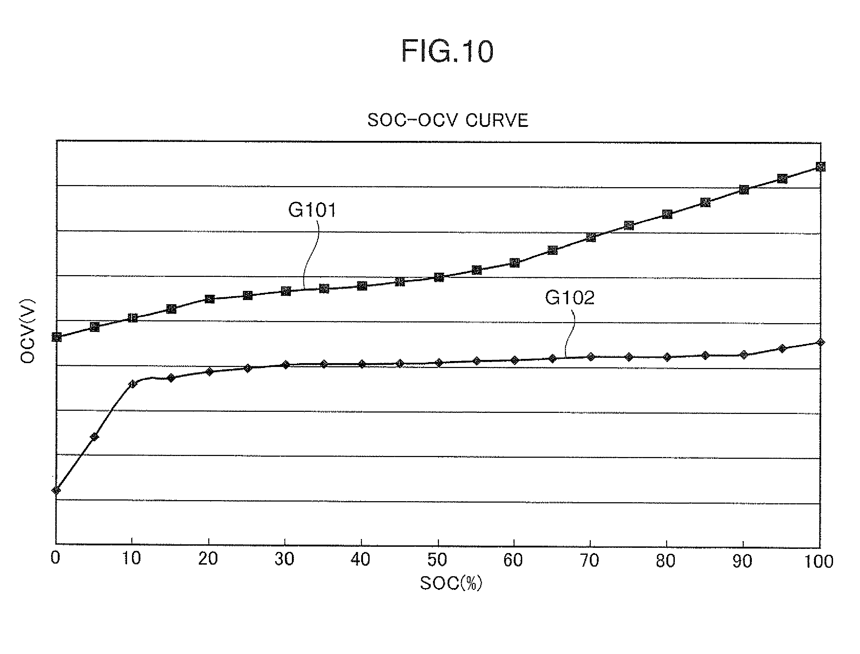

Fig. 10 is a graph showing the relationship of the SOC and the terminal voltage of the secondary battery (for instance, a lithium ion secondary battery). The horizontal axis of Fig. 10 shows the SOC, and the vertical axis shows the terminal voltage during the no-load of the secondary battery; in other words, it shows the OCV. As shown with G101 in the graph of Fig. 10, the terminal voltage of the secondary battery generally rises pursuant to the increase in the SOC as the charging process advances.

Accordingly, with a storage element having the characteristics shown in the graph G101, since the change in the accumulated charge is easily reflected in the terminal voltage, the detection accuracy of variation in the accumulated charge is favorable.

Nevertheless, among storage elements, as shown with G102 in the graph of Fig. 10, for instance, there are those in which the change in terminal voltage is small in relation to the change in the SOC; that is, the accumulated charge, and which have a flat voltage profile. With a storage element having a flat terminal voltage change in relation to the change in the SOC, since the terminal voltage changes gradually in relation to the change in the SOC, if the SOC is detected based on the terminal voltage, the detection accuracy of variation in the accumulated charge will deteriorate. For example, although in reality the SOC is 20%, there is a possibility that it will be erroneously detected as 80%.

In addition, if the detection accuracy of variation in the accumulated charge deteriorates, the electric storage device will be charged/discharged while variation in the accumulated charge remains, and those among the plurality of storage elements with a small accumulated charge will be overdischarged, and those with a large accumulated charge will be overcharged. Consequently, there is a drawback in that the storage element will deteriorate, whereby the deterioration in the life of the overall electric storage device is accelerated.

Patent Document 1: Japanese Patent Application Laid-Open No. H8-19188

### Disclosure of the Invention

An object of this invention is to provide an imbalance identifying circuit, an imbalance identification method, and a power source apparatus using the same capable of improving the identification accuracy on whether an imbalance has occurred in the respective amounts of charge in a plurality of accumulators.

The imbalance identifying circuit according to one aspect of this invention comprises: a voltage detection unit for detecting a terminal voltage in each of a plurality of accumulators; a gradient acquisition unit for performing gradient information acquisition processing of suspending charge when the plurality of accumulators are being charged and acquiring, from each of the terminal voltages detected by the voltage detection unit during the suspension of charge, voltage gradient information showing an amount of change per predetermined time of each of the terminal voltages; and an imbalance identification unit for identifying whether an imbalance of the amount of charge in the plurality of accumulators has occurred by using a plurality of pieces of voltage gradient information corresponding to each of the terminal voltages acquired by the gradient acquisition unit.

Moreover, the imbalance identifying circuit according to another aspect of this invention comprises: a step of detecting, by a voltage detection unit, a terminal voltage in each of a plurality of accumulators; a step of performing, by a gradient acquisition unit, gradient information acquisition processing of suspending charge when the plurality of accumulators are being charged and acquiring, from each of the terminal voltages detected by the voltage detection unit during the suspension of charge, voltage gradient information showing an amount of change per predetermined time of each of the terminal voltages; and a step of identifying, by an imbalance identification unit, whether an imbalance of the amount of charge in the plurality of accumulators has occurred by using a plurality of pieces of voltage gradient information corresponding to each of the terminal voltages acquired by the gradient acquisition unit.

With the imbalance identifying circuit configured as described above and the imbalance identification method, the gradient acquisition unit suspends the charge when the plurality of accumulators are being charged and acquires, from each of the terminal voltages detected by the voltage detection unit during the suspension of charge, voltage gradient information showing the amount of change per predetermined time of each of the terminal voltages. In addition, the imbalance identification unit identifies whether an imbalance of the amount of charge in the plurality of accumulators has occurred by using a plurality of pieces of voltage gradient information corresponding to each of the terminal voltages acquired by the gradient acquisition unit. In the foregoing case, even when using an accumulator in which the change in the terminal voltage is small in relation to the change in the amount of charge, as a result of identifying whether an imbalance of the amount of charge in a plurality of accumulators has occurred based on the voltage gradient information, the identification accuracy of whether an imbalance has occurred in the respective amounts of charge can be improved in comparison to a case of identifying the imbalance based on the SOC that is directly converted from the terminal voltage as with the conventional technology.

### Brief Description of the Drawings

[Fig. 1] is a block diagram showing an example of the configuration of an imbalance identifying circuit employing the imbalance identification method according to an embodiment of the present invention, a power source apparatus comprising the imbalance identifying circuit, and an electrical power system.
[Fig. 2] Fig.2 is an explanatory diagram explaining the change in the terminal voltage when setting the charging current to zero after causing the charging current to flow to the storage element.
[Fig. 3] Fig.3 is a block diagram showing an example of the configuration of the voltage detection unit shown in Fig. 1.
[Fig. 4] Fig. 4 is a block diagram showing another example of the configuration of the voltage detection unit shown in Fig. 1.
[Fig. 5] Fig. 5 is a flowchart showing an example of the operation including the first preliminary identification processing of the power source apparatus shown in Fig. 1.
[Fig. 6] Fig. 6 is a flowchart showing an example of the second preliminary identification processing.
[Fig. 7] Fig. 7 is a flowchart showing an example of the third preliminary identification processing.
[Fig. 8] Fig. 8 is a flowchart showing an example of the final identification processing.
[Fig. 9] Fig. 9 is a flowchart showing an example of the equalization processing.
[Fig. 10] Fig. 10 is a graph showing the relationship between the SOC of a secondary battery and the terminal voltage.

### Best Mode for Carrying Out the Invention

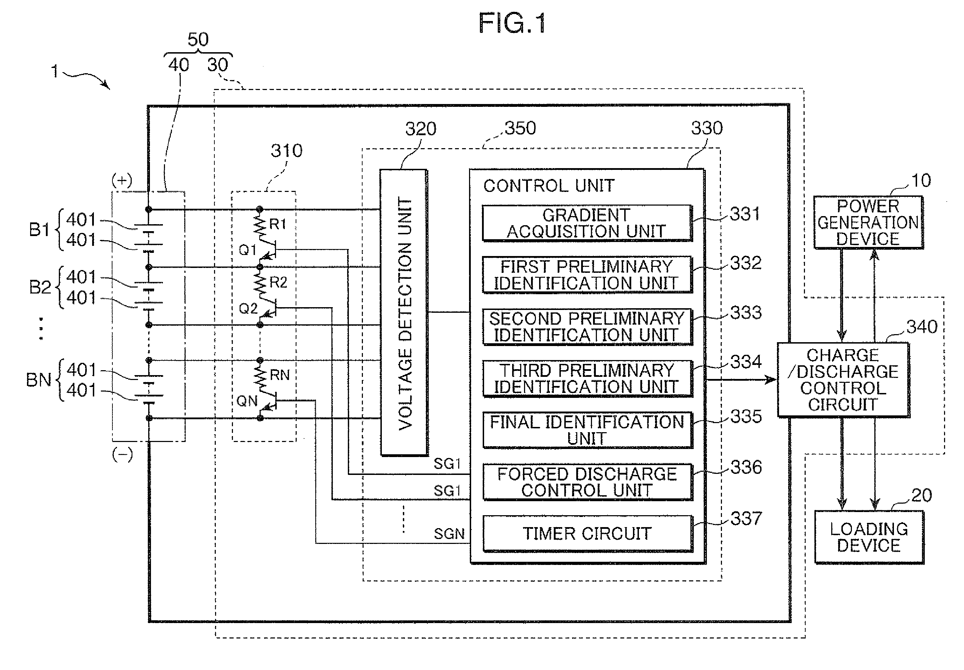

Embodiments of the present invention are now explained with reference to the attached drawings. Incidentally, components that are given the same reference numeral are of the same configuration, and the explanation thereof is omitted. Fig. 1 is a block diagram showing an example of the configuration of an imbalance identifying circuit employing the imbalance identification method according to an embodiment of the present invention, a power source apparatus comprising the imbalance identifying, and an electrical power system.

The electrical power system 1 shown in Fig. 1 comprises a power generation device 10, a power source controller 30, and an electric storage device 40. A power source apparatus 50 is configured from the power source controller 30 and the electric storage device 40. The power source apparatus 50 is used as various types of power source apparatuses such a battery pack, an uninterruptible power source apparatus, a power generation device utilizing natural energy, an electric storage device for power conditioning that accumulates surplus power of a power generation device which uses as an engine as its power source, and a load leveling power source. Connected to the power source apparatus 50 is a loading device 20 that receives the supply of power from the power generation device 10 and the electric storage device 40.

Specifically, the power generation device 10 is, for example, a dynamo that uses a power generation device that utilizes natural energy of a solar power generation device (solar battery) or the like, or an engine as its power source. The power source apparatus 50 may also be configured to receive the supply of power from a commercial power source instead of the power generation device 10.

The electric storage device 40 is configured by serially connecting N-number of accumulators B1, B2, ..., BN. The accumulators B1, B2, ..., BN are housed in a box not shown. Each of the accumulators B1, B2, ..., BN is configured by electrically and serially connecting a plurality of storage elements 401. As the respective storage elements 401, used may be an alkaline storage battery such as a nickel hydride battery, an organic battery such as a lithium ion battery, and a storage element such as an electric double-layer capacitor.

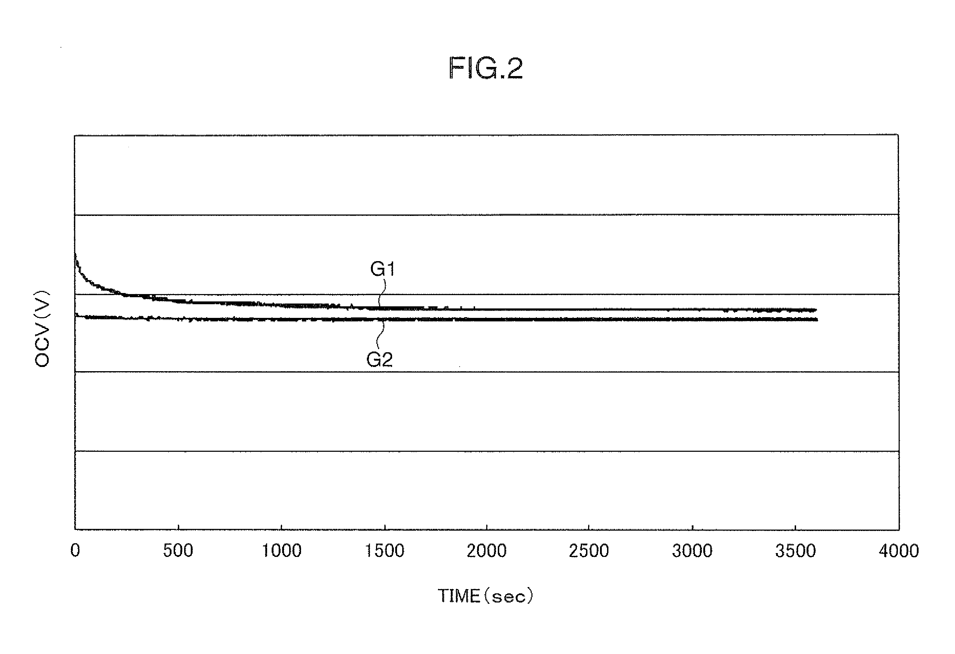

As shown with G102 in the graph of Fig. 10, for instance, the storage element 401 has flat characteristics in which the change in the terminal voltage is small in relation to the change in the SOC. As shown with G1 and G2 in the graph of Fig. 2, with the storage element 401, the amount of decrease in the terminal voltage after the suspension of charge until it becomes a steady-state value becomes greater as the amount of charge increases; that is, the closer it becomes to a full charge.

Specifically, as the storage element 401, a lithium ion secondary battery using LiFePO₄ as an example of a lithium phosphate compound having an olivine structure as the positive electrode active material can be preferably used. Incidentally, the positive electrode active material may also be, for instance, Li_{X}A_{Y}B_{Z}PO₄ (where A is at least one type among Me, Fe, Mn, Co, Ni, and Cu, B is at least one type among Mg, Ca, Sr, Sc, Y, Ti, Zr, V, Nb, Cr, Mo, W, Ag, Zn, In, Sn, and Sb, and 0 < X ≤ 1, 0.9 ≤ Y ≤ 1, 0 ≤ Z ≤ 0.1), or more preferably LixFePO₄ (0 < X ≤ 1).

With a lithium ion secondary battery that uses LiFePO₄ as the positive electrode active material, for example, as shown with G102 in the graph of Fig. 10, the change in the terminal voltage in relation to the change in the SOC is small and flat in a wide area. For example, as the storage element 401, used may be a secondary battery in which the amount of change in the terminal voltage in cases where the SOC changed from 10% to 95% is 0.01V or more and less than 0.3V.

In addition, as shown in Fig. 2, the present inventors experimentally discovered that a lithium ion secondary battery that uses LiFePO₄ as the positive electrode active material has characteristics where the amount of decrease in the terminal voltage per predetermined time after the suspension of charge becomes greater when the SOC increases.

Fig. 2 is an explanatory diagram explaining the change in the terminal voltage (OCV) when setting the charging current to zero (when suspending the charge) after causing the charging current to flow to the storage element 401. G1 in the graph shows a case where the charge is suspended when the SOC is 100%, and G2 in the graph shows a case where the charge is suspended when the SOC is 70%. The vertical axis of Fig. 2 shows the terminal voltage (OCV) of the storage element 401, and the horizontal axis shows the elapsed time from the suspension of charge.

Here, the present inventors discovered that the gradient of the falling curve of the terminal voltage after the charge was suspended; that is, the amount of decrease in the terminal voltage per predetermined time after the charge was suspended becomes greater, as shown in Fig. 2, when the storage element 401 is fully charged (graph G1) in comparison to cases when the SOC of the storage element 401 is small (graph G2).

Incidentally, there is no particular limitation to the number of accumulators, the number of storage elements 401, and the connection status. For example, the respective accumulators may be configured by a plurality of storage elements 401 being connected in serial, in parallel, or a combination of serial and parallel. In addition, the respective accumulators may each be a single storage element 401. The configuration of the electric storage device 40 is not limited to the foregoing configuration.

The power source controller 30 is configured, for example, as an ECU (Electric Control Unit) for automobile use. The power source controller 30 comprises a discharge unit 310, an imbalance identifying circuit 350, and a charge/discharge control circuit 340. The imbalance identifying circuit 350 comprises a voltage detection unit 320, and a control unit 330.

The charge/discharge control circuit 340 charges, for example, the surplus power generated in the power generation device 10 or the regenerative electric power generated in the loading device 20 to the electric storage device 40. If the consumption current of the loading device 20 drastically increase or the electric power generation of the power generation device 10 decreases and the power demanded by the loading device 20 exceeds the power of the power generation device 10, the charge/discharge control circuit 340 supplies the insufficient power from the electric storage device 40 to the loading device 20. The charge/discharge control circuit 340 is also able to suspend or allow the charging of the electric storage device 40 according to a control signal from the control unit 330.

As described above, as a result of the charge/discharge of the electric storage device 40 being controlled by the charge/discharge control circuit 340, under normal circumstances, the SOC of the electric storage device 40 will shift within the range of approximately 20 to 80%. Otherwise, with a load leveling power source or a plug-in hybrid vehicle that utilizes nighttime power, the electric storage device 40 is charged until the SOC become 100%, and discharged when the loading device 20 needs energy.

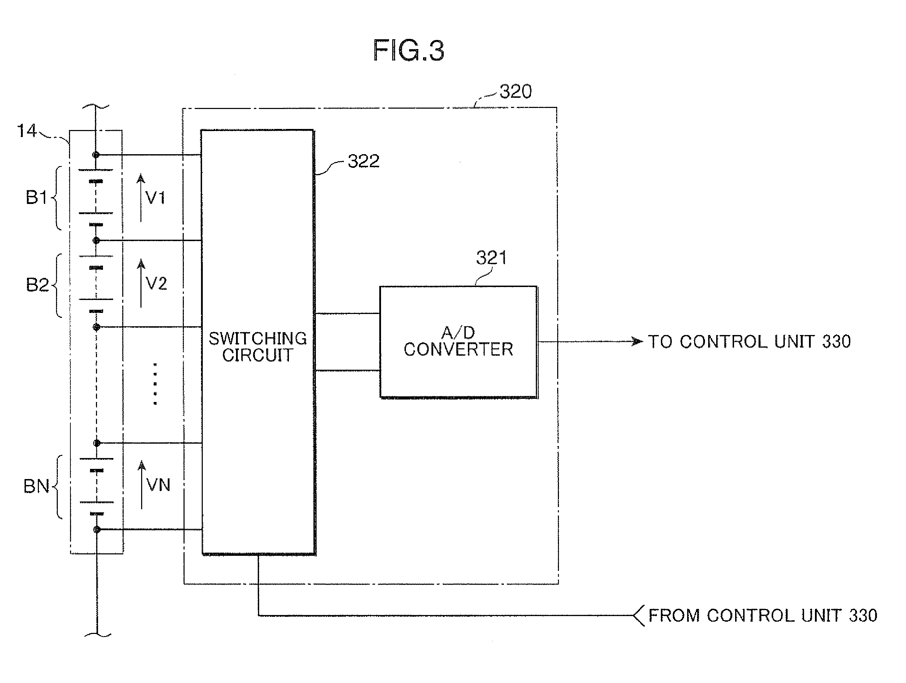

The voltage detection unit 320 detects each of the terminal voltages V1, V2, ..., VN of the accumulators B1, B2, ..., BN, and outputs the detected values to the control unit 330. Fig. 3 is a block diagram showing an example of the configuration of the voltage detection unit 320 shown in Fig. 1. The voltage detection unit 320 shown in Fig. 3 comprises, for example, an A/D converter 321 (voltage measurement unit), and a switching circuit 322 (switching unit). The voltage measurement unit is not limited to an A/D converter, and may also be a voltage detection circuit such as a comparator.

The switching circuit 322 is configured, for example, from a plurality of switching devices. The switching circuit 322 turns ON/OFF a plurality of switching devices according to a control signal from the control unit 330, and thereby selects one among the respective terminal voltages V1., V2, ..., VN of the accumulators B1, B2, ..., BN and outputs it to the A/D converter 321.

The A/D converter 321 converts the voltage output from the switching circuit 322 into a digital value and outputs it to the control unit 330.

As a result of causing the switching circuit 322 to sequentially select the terminal voltages V1, V2, ..., VN, the control unit 330 is able to convert the terminal voltages V1, V2, ..., VN into a digital value with the A/D converter 321, and acquire data showing the terminal voltages V1, V2, ..., VN.

Consequently, since only one voltage measurement unit such as the A/D converter 321 needs to be provided irrespective of the number of accumulators, space-saving and cost-saving can be easily achieved.

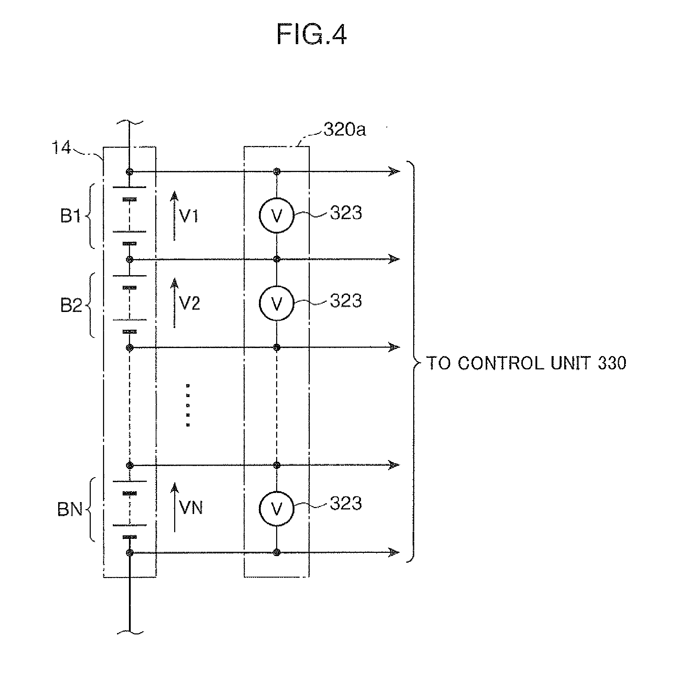

Incidentally, as shown in Fig. 4 for instance, the voltage detection unit 320a may also be configured from N-number of voltage measurement units 323 for detecting the respective terminal voltages V1, V2, ..., VN. In the foregoing case, the detection time of the terminal voltages V1, V2, ..., VN can be shortened since the terminal voltages V1, V2, ..., VN can be simultaneously detected.

The discharge unit 310 comprises N-number of resistors R1, R2, ..., RN, and N-number of transistors Q1, Q2, ..., QN. A serial circuit of the resistor R1 and the transistor Q1 is connected in parallel with the accumulator B1, a serial circuit of the resistor R2 and the transistor Q2 is connected in parallel with the accumulator B2, and so on; that is, a serial circuit of a resistor and a transistor is connected in parallel with the respective accumulators.

The transistors Q1, Q2, ..., QN are respectively turned ON/OFF according to the equalization discharge signals SG1, SG2, ..., SGN from the control unit 330. When the transistors Q1, Q2, ..., QN are turned ON, the accumulator that is connected in parallel with the transistor that was turned ON is discharged via the resistor.

The control unit 330 comprises, for example, a CPU (Central Processing Unit) for executing prescribed arithmetic processing, a ROM (Read Only Memory) storing prescribed control programs, a RAM (Random Access Memory) for temporarily storing data, a timer circuit 337, and their peripheral circuits.

The control unit 330 executes the control programs stored in the ROM, and thereby functions as a gradient acquisition unit 331, a first preliminary identification unit 332, a second preliminary identification unit 333, a third preliminary identification unit 334, a final identification unit 335, and a forced discharge control unit 336. Here, the first preliminary identification unit 332, the second preliminary identification unit 333, the third preliminary identification unit 334, and the final identification unit 335 correspond to an example of the imbalance identification unit. Incidentally, the charge/discharge control circuit 340 and the loading device 20 may be configured by including the control unit 330 in part or in whole.

The gradient acquisition unit 331 suspends the charge with the charge/discharge control circuit 340 while the electric storage device 40 is being charged and acquires, from the terminal voltages of the accumulators B1, B2, ..., BN detected by the voltage detection unit 320 during the suspension of charge, voltage gradient information showing the amount of decrease per predetermined time; for instance, per unit time of the terminal voltages.

The first preliminary identification unit 332, as the first preliminary identification processing, preliminarily identifies that an imbalance of the amount of charge in the accumulators B1, B2, ..., BN has occurred when the difference between the respective pieces of voltage gradient information acquired by the gradient acquisition unit 331 exceeds a pre-set first identification value γ1 immediately after the suspension of charge.

The second preliminary identification unit 333, as the second preliminary identification processing, preliminarily identifies that an imbalance of the amount of charge in the accumulators B1, B2, ..., BN has occurred when the difference between the respective pieces of voltage gradient information acquired by the gradient acquisition unit 331 exceeds a pre-set second identification value γ2 after the lapse of a pre-set setting time β from the suspension of charge.

The third preliminary identification unit 334, as the third preliminary identification processing, preliminarily identifies that an imbalance of the amount of charge in the accumulators B1, B2, ..., BN has occurred when the difference between the elapsed time from the suspension of charge when each piece of voltage gradient information acquired from the gradient acquisition unit 331 becomes equal to a pre-set reference value ε exceeds a pre-set third identification value γ3.

The final identification unit 335, as the final identification processing, finally identifies that the imbalance of the amount of charge in the accumulators B1, B2, ..., BN has occurred when all of the first preliminary identification unit 332, the second preliminary identification unit 333, and the third preliminary identification unit 334 identifies that the imbalance is occurring.

The forced discharge control unit 336 reduces the variation of the accumulated charge in the accumulators B1, B2, ..., BN; that is, it reduces the imbalance by causing each of the accumulators B1, B2, ..., BN to be discharged by the discharge unit 310 until each of the terminal voltages V1, V2, ..., VN detected by the voltage detection unit 320 falls below a pre-set target voltage α2 when the final identification unit 335 identifies that the imbalance has occurred.

The timer circuit 337 is used for detecting the terminal voltages V1, V2, ..., VN periodically; for instance, at unit time intervals, by the voltage detection unit 320, or for timing the elapsed time from the suspension of charge.

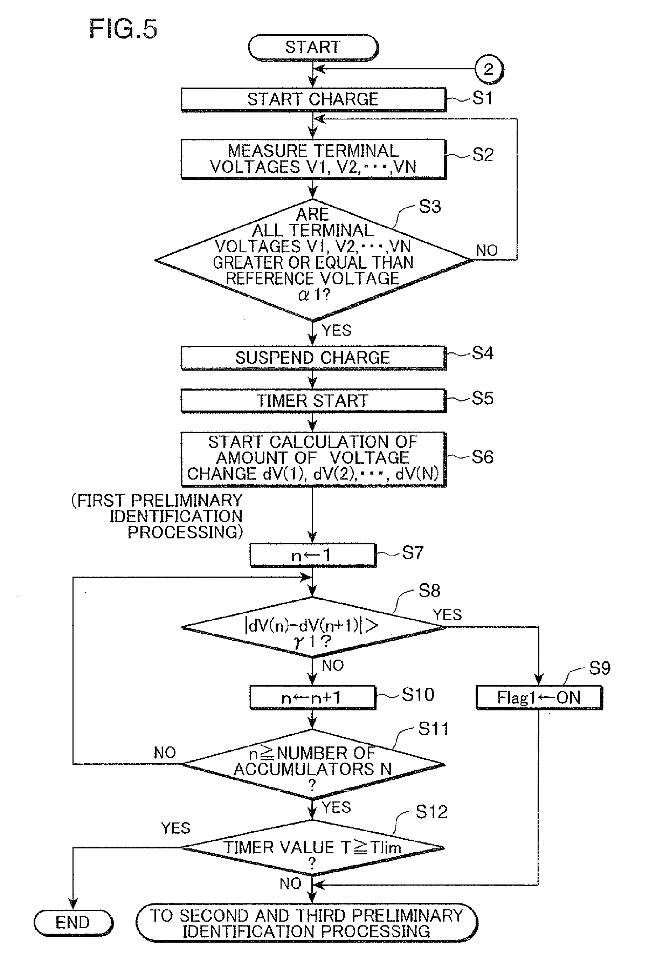

The operation of the power source apparatus 50 shown in Fig. 1 is now explained. Fig. 5 to Fig. 9 are flowcharts showing an example of the operation of the power source apparatus 50 shown in Fig. 1. Foremost, the charge/discharge control circuit 340 supplied a charging current from the power generation device 10 to the electric storage device 40, and the charging of the electric storage device 40 is thereby started (step S1).

Subsequently, as a result of the switching circuit 322 sequentially changes the detection-target terminal voltages according to a control signal from the control unit 330, the voltage detection unit 320 detects each of the terminal voltages V1, V2, ..., VN of the accumulators B1, B2, ..., BN (step S2). The terminal voltages V1, V2, ..., VN may also be simultaneously detected by the voltage detection unit 320a.

Subsequently, the first preliminary identification unit 332 compares the terminal voltages V1 , V2, ..., VN with the pre-set reference voltage α1 (step S3). If any one of the terminal voltages V1, V2, ..., VN is less than the reference voltage α1, the first preliminary identification unit 332 returns to step S2 and repeats the detection of the terminal voltages V1, V2, ..., VN while continuing the charging process (NO at step S3). Meanwhile, if all of the terminal voltages V1, V2, ..., VN are greater or equal than the reference voltage α1 (YES at step S3), the first preliminary identification unit 332 proceeds to step S4 in order to perform the preliminary identification of the imbalance of the amount of charge.

The imbalance is thereby identified after all the accumulators B1, B2, ..., BN are charged to the reference voltage α1 or more.

As described later, if the final identification unit 335 determines that an imbalance has occurred, the forced discharge control unit 336 reduces the imbalance by discharging the respective accumulators B1, B2, ..., BN until the respective terminal voltages falls less or equal the target voltage α2. Accordingly, if the terminal voltages of the accumulators B1, B2, ..., BN are below the target voltage α2 before the discharge is started by the forced discharge control unit 336, the imbalance cannot be reduced based on the discharge.

Nevertheless, as a result of setting the reference voltage α1 to a voltage value that is greater or equal than the target voltage α2, the imbalance can be reduced based on the discharge as a result of the terminal voltages of the accumulators B1, B2, ..., BN becoming greater or equal than the target voltage α2.

At step S4, the first preliminary identification unit 332 outputs a control signal requesting the suspension of charge to the charge/discharge control circuit 340, and the charge/discharge control circuit 340 suspends the charge by setting the charge/discharge current of the electric storage device 40 to zero (step S4).

The first preliminary identification unit 332 starts the timing with the timer circuit 337 (step S5). The timer circuit 337 times the elapsed time from the suspension of charge.

Subsequently, the gradient acquisition unit 331 causes the voltage measurement unit 323 to measure the terminal voltages V1, V2, ..., VN at predetermined time intervals; for instance, at unit time intervals. The gradient acquisition unit 331 thereafter calculates the difference between the previous measured value and the current measured value of the terminal voltages V1, V2, ..., VN at unit time intervals as the amount of voltage change dV/dt as an example of the voltage gradient information (step S6). Thereafter, while the first, second, and third preliminary identification processing are being executed, the calculation of the amount of voltage change dV/dt is continuously executed.

The amount of voltage change dV/dt is not limited to being measured at unit time intervals, and the gradient acquisition unit 331 may convert this to the amount of voltage change per unit time, and use the amount of change per predetermined time as the voltage gradient information as is. The respective amounts of voltage change dV/dt of the terminal voltages V1, V2, ..., VN are hereinafter referred to as the amounts of voltage change dV(1), dV(2), ..., dV(N).

Subsequently, the first preliminary identification unit 332 substitutes "1" for the variable n (step S7). The first preliminary identification unit 332 thereafter compares the absolute value of dV(n) - dV(n + 1); that is, the difference in the amount of voltage change dV/dt of the adjacent accumulators, with the first identification value γ1 (step S8).

If the absolute value of dV(n) - dV(n + 1) is greater than the first identification value γ1 (YES at step S8), it is determined that an imbalance requiring the correction of the accumulated charge has occurred, the first identification Flag 1 is turned ON (step S9), and the routine proceeds to the second and third preliminary identification processing. The second and third preliminary identification processing are executed in parallel.

Meanwhile, if the absolute value of dV(n) - dV(n + 1) is not greater than the first identification value γ1 (NO at step S8), the first preliminary identification unit 332 adds "1" to the variable n (step S10). Subsequently, the first preliminary identification unit 332 compares the variable n and the number of accumulators N (step S11).

If the variable n is less than the number of accumulators N (NO at step S11), it proceeds to step S8 once again in order to identify an imbalance of the subsequent accumulator. Meanwhile, if the variable n is greater than the number of accumulators N (YES at step S11), the routine proceeds to step S12 since the imbalance identification of all accumulators is complete.

Subsequently, at step S12, the first preliminary identification unit 332 compares the timer value T of the timer circuit 337 with the pre-set monitoring time Tlim (step S12). The monitoring time Tlim is set, for example, for the time that it takes the terminal voltages V1, V2, ..., VN of the accumulators B1, B2, ..., BN to reach a steady state after the suspension of charge.

Specifically, if time that is greater or equal than the monitoring time Tlim elapses after the suspension of charge, the terminal voltages V1, V2, ..., VN become a steady state and will no longer change. Consequently, it will no longer be possible to identify the imbalance based on the amount of change in the terminal voltage.

Thus, if the timer value T becomes greater or equal than the monitoring time Tlim (YES at step S12), the routine is subject to forced termination without proceeding to the second and third preliminary identification processing. Meanwhile, if the timer value T is less than the monitoring time Tlim (NO at step S12), the routine proceeds to the second and third preliminary identification processing.

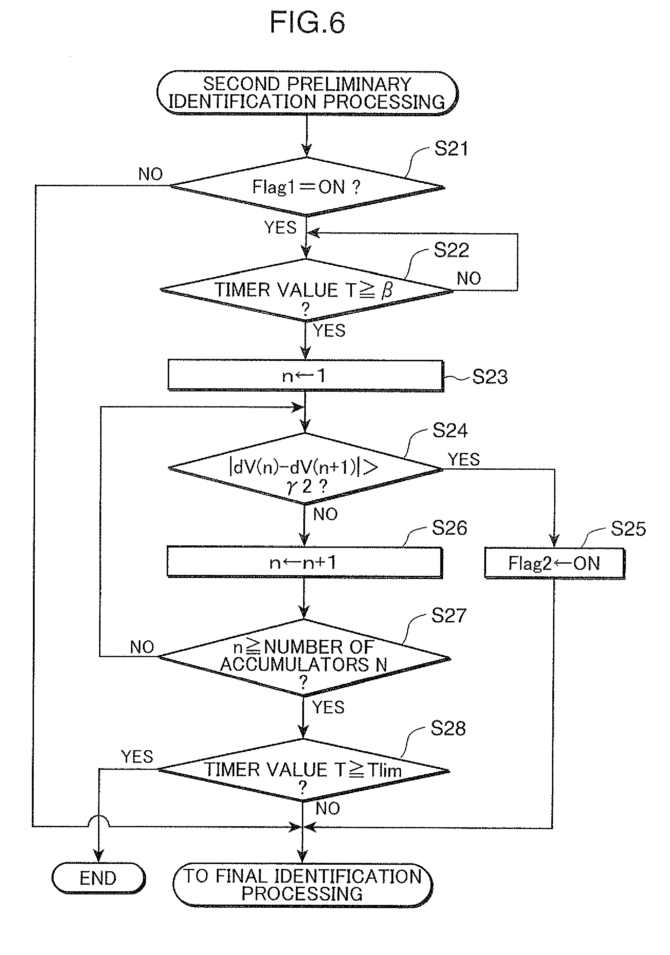

The second preliminary identification processing is now explained. Fig. 6 is a flowchart showing an example of the second preliminary identification processing. In the second preliminary identification processing, foremost, the second preliminary identification unit 333 determines whether the first identification Flag 1 is ON (step S21). If the first identification Flag 1. is not ON (NO at step S21), the second preliminary identification processing is ended and the routine proceeds to the final identification processing.

If the time that the charge is suspended is prolonged for the equalization processing, it will affect the use of the electrical power system 1. Thus, the monitoring time Tlim may also be set to be a length that will not interfere with the use of the electrical power system 1 even if the charge is suspended for the equalization processing.

In the final identification processing, since the final identification unit 335 identifies that an imbalance has occurred in the amount of charge of the accumulators B1, B2, ..., BN when the first preliminary identification unit 332, the second preliminary identification unit 333, and the third preliminary identification unit 334 all preliminarily identify that an imbalance has occurred; that is, when the first identification Flag 1, the second identification Flag 2, and the third identification Flag 3 are all turned ON, if the first identification Flag 1 is not turned ON (NO at step S21), since it is evident that the final identification unit 335 will identify that an imbalance has not occurred at that point in time, the processing load is alleviated by omitting the execution of steps S22 to S28.

Meanwhile, if the first identification Flag 1 is ON (YES at step S21), the routine proceeds to step S22.

Subsequently, at step S22, the second preliminary identification unit 333 compares the timer value T of the timer circuit 337 with the setting time β (step S22). If the timer value T becomes greater or equal than the setting timer β (YES at step S22), the second preliminary identification unit 333 substitutes "1" for the variable n (step S23).

When the timer value T becomes greater or equal than the setting time β; that is, when the setting time β elapses from the suspension of charge, the second preliminary identification unit 333 calculates the absolute value of dV(n) - dV(n + 1); that is, the amount of voltage change dV/dt in the adjacent accumulators based on the amount of voltage change dV/dt obtained by the gradient acquisition unit 331, and compares it with the second identification value γ2 (step S24).

If the absolute value of dV(n) - dV(n + 1) is greater than the second identification value γ2 (YES at step S24), it is determined that an imbalance requiring the correction of the accumulated charge has occurred, the second identification Flag 2 is turned ON (step S25), and the routine proceeds to the final identification processing.

Meanwhile, if the absolute value of dV(n) - dV(n + 1) is not greater than the second identification value γ2 (NO at step S24), the second preliminary identification unit 333 adds "1" to the variable n (step S26). The second preliminary identification unit 333 thereafter compares the variable n and the number of accumulators N (step S27).

If the variable n is less than the number of accumulators N (NO at step S27), the routine proceeds to step S24 once again in order to identify an imbalance of the subsequent accumulator. Meanwhile, if the variable n is greater or equal than the number of accumulators N (YES at step S27), the routine proceeds to step S28 since the imbalance identification of all accumulators is complete.

Subsequently, at step S28, the second preliminary identification unit 333 compares, as with step S12, the time value T of the timer circuit 337 with the monitoring time Tlim (step S28). If the timer value T becomes greater or equal than the monitoring time Tlim (YES at step S28), the routine is subject to forced termination without proceeding to the final identification processing. Meanwhile, if the timer value T is less than the monitoring time Tlim (NO at step S28), the routine proceeds to the final identification processing.

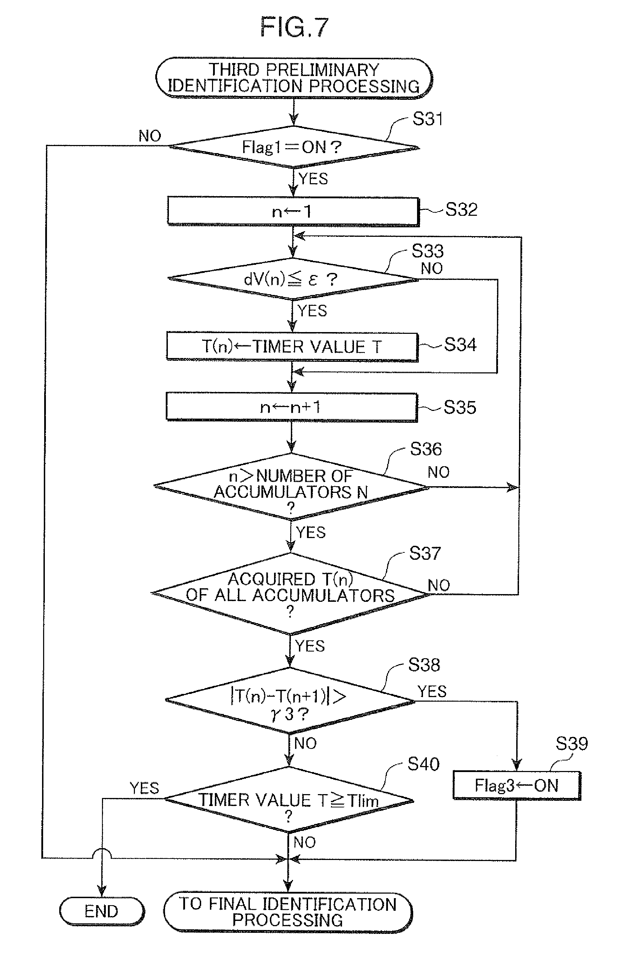

The third preliminary identification processing is now explained. Fig. 7 is a flowchart showing an example of the third preliminary identification processing. In the third preliminary identification processing, foremost, the third preliminary identification unit 334 determines, as with step S21, whether the first identification Flag 1 is ON (step S31). If the first identification Flag 1 is not ON (NO at step S31), the third preliminary identification processing is ended and the routine proceeds to the final identification processing.

Meanwhile, if the first identification Flag 1 is ON (YES at step S31), the routine proceeds to step S32. At step S32, the third preliminary identification unit 334 substitutes "1" for the variable n (step S32).

Subsequently, the third preliminary identification unit 334 compares the latest amount of voltage change dV(n) obtained by the gradient acquisition unit 331 with the pre-set reference value ε (step S33). If the amount of voltage change dV(n) is not greater than the reference value ε (YES at step S33), the third preliminary identification unit 334 stores the timer value T of the timer circuit 337 at that time as the detected elapsed time T(n) in the RAM (step S34), and the routine proceeds to step S35.

Since the amount of voltage change dV(n) decreases gradually with the passage of time, the detected elapsed time T(n) shows the elapsed time from the suspension of charge until the amount of voltage change dV(n) reaches the reference value ε.

Meanwhile, if the amount of voltage change dV(n) is exceeding the reference value ε (NO at step S33), the routine proceeds to step S35 without executing step S34.

At step S35, the third preliminary identification unit 334 adds "1" to the variable n (step S35). The third preliminary identification unit 334 thereafter compares the variable n and the number of accumulators N (step S36).

If the variable n is not greater than the number of accumulators N (NO at step S36), the routine proceeds to step S33 once again in order to acquire the detected elapsed time T(n) of the subsequent accumulator. Meanwhile, if the variable n is exceeding the number of accumulators N (YES at step S36), the routine proceeds to step S37.

Subsequently, at step S37, the third preliminary identification unit 334 confirms whether the detected elapsed time T(n) of all accumulators has been stored (step S37). If there is an accumulator in which the detected elapsed time T(n) has not yet been stored (NO at step S37), the routine returns to step S33 once again and acquisition of the detected elapsed time T(n) is continued. Meanwhile, if the detected elapsed time T(n) of all accumulators has been stored (YES at step S37), the routine proceeds to step S38.

Subsequently, at step S38, based on the third preliminary identification processing, the absolute value of T(n) - T(n + 1); that is, the difference in the detected elapsed time of adjacent accumulators is compared with the third identification value γ3 in a range where the variable n is 1 to (number of accumulators N-1) (step S38). Since the detected elapsed time changes based on the amount of charge at the time that the charge is suspended, the larger the amount of charge of the respective accumulators, the larger the absolute value of T(n) - T(n + 1).

If the absolute value of T(n) - T(n + 1) is greater than the third identification value γ3 (YES at step S38), it is determined that an imbalance requiring the correction of the accumulated charge has occurred, the third identification Flag 3 is turned ON (step S39), and the routine proceeds to the final identification processing.

Meanwhile, if the absolute value of T(n) - T(n + 1) is not greater than the third identification value γ3 (NO at step S38), the third preliminary identification unit 334 compares, as with step S12, the timer value T of the timer circuit 337 and the monitoring time Tlim (step S40). If the timer value T becomes greater or equal than the monitoring time Tlim (YES at step S40), the third preliminary identification processing is subject to forced termination without proceeding to the final identification processing. Meanwhile, if the timer value T is less than the monitoring time Tlim (NO at step S40), the routine proceeds to the final identification processing.

Incidentally, at step S38, although a case was explained where the time difference of arrival up to the time that the amount of voltage change dV/dt of the respective accumulators reaches the reference value ε was sought as the time difference of arrival between the adjacent accumulators, this may also be the difference between the maximum arrival time (Tmax) and the minimum arrival time (Tmin) in the respective accumulators, or the difference between the average arrival time (Tave) and the arrival time of the respective accumulators, or the difference between the maximum/minimum arrival time and the average arrival time.

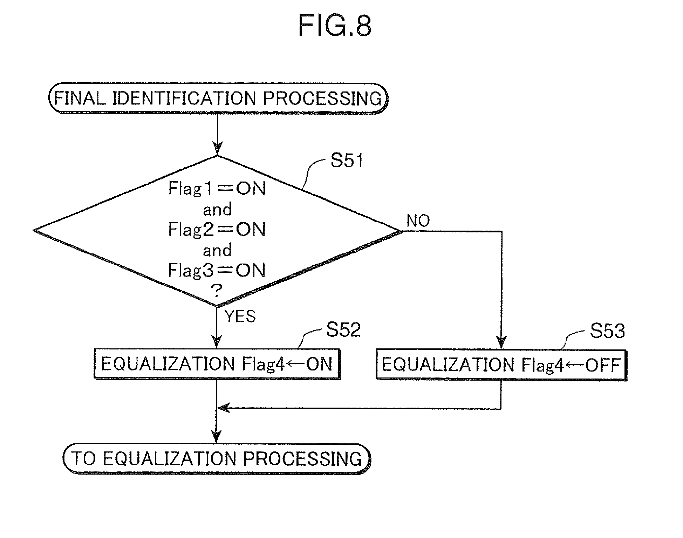

An example of the final identification processing is now explained. Fig. 8 is a flowchart showing an example of the final identification processing. In the final identification processing, foremost, the final identification unit 335 determines whether the first identification Flag 1, the second identification Flag 2, and the third identification Flag 3 are all turned ON (step S51).

If the first identification Flag 1, the second identification Flag 2, and the third identification Flag 3 are all turned ON (YES at step S51), it is determined that an imbalance requiring equalization among the respective accumulators has occurred, the equalization Flag 4 is turned ON (step S52), and the routine proceeds to the equalization processing. Meanwhile, if even one among the first identification Flag 1, the second identification Flag 2, and the third identification Flag 3 is OFF, it is determined that an imbalance requiring equalization among the respective accumulator has not occurred, the equalization Flag 4 is turned OFF (step S53), and the routine proceeds to the equalization processing.

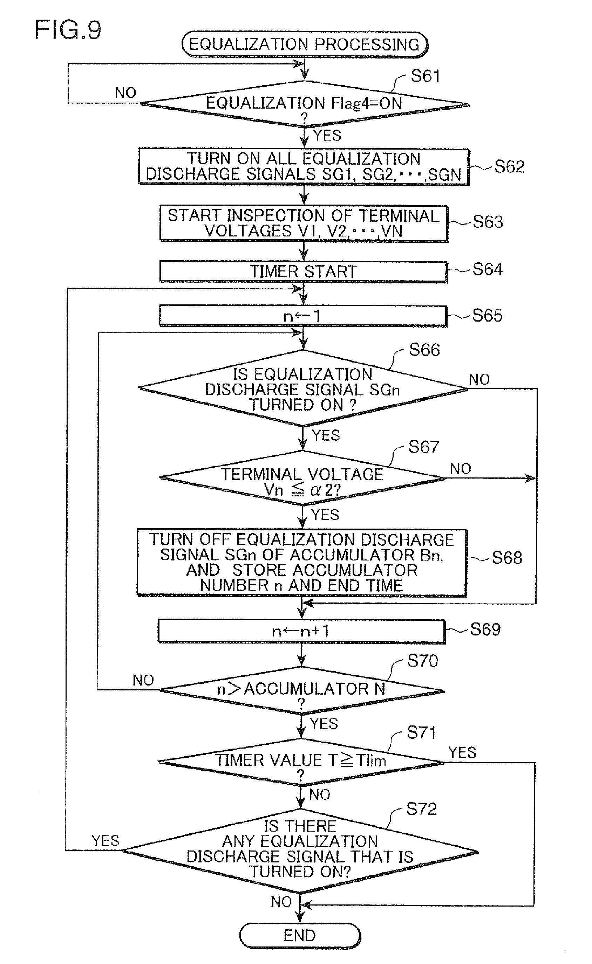

An example of the equalization processing is now explained. Fig. 9 is a flowchart showing an example of the equalization processing. Foremost, the forced discharge control unit 336 determines whether the equalization Flag 4 is ON (step S61). If it is determined that the equalization Flag 4 is ON (YES at step S61), the forced discharge control unit 336 turns ON all the equalization discharge signals SG1, SG2, ..., SGN and turns ON the transistors Q1, Q2, ..., QN, and thereby starts the equalization processing (step S62).

Consequently, in the foregoing final identification processing, since the equalization processing of step S62 onward will be started only when the three different types of processing; namely, the first preliminary identification processing, the second preliminary identification processing, and the third preliminary identification processing all identify an imbalance requiring equalization among the respective accumulators, and the equalization Flag 4 is turned ON, the accuracy of the imbalance identification will increase, and the repetition of equalization processing based on erroneous identification can be prevented.

While the discharge is being executed based on the equalization processing, power cannot be supplied from the power generation device 10 to the loading device 20. In addition, if the discharge based on the equalization processing is executed repeatedly, the accumulators will be frequently discharged, and this will lead to the increase of energy loss and the deterioration of accumulators by the increase in the charge/discharge cycle count. However, as a result of preventing the repetition of equalization processing based on erroneous identification, the possibility of the foregoing drawback occurring can be reduced.

In the foregoing final identification processing, the configuration may also be such that the equalization Flag 4 is turned ON when any one among the first preliminary identification processing, the second preliminary identification processing, and the third preliminary identification processing identifies an imbalance requiring equalization among the respective accumulators. In the foregoing case, the omission of detection of imbalance can be reduced.

Subsequently, the forced discharge control unit 336 starts the inspection of the terminal voltages V1, V2, ..., VN after starting the equalization processing (step S63), and simultaneously starts the timer circuit 337 (step S64). The forced discharge control unit 336 thereafter substitutes "1" for the variable n and starts the voltage inspection from the first accumulator (step S65), and determines whether the nth equalization discharge signal SGn is ON (step S66).

If the equalization discharge signal SGn is OFF (NO at step S66), the routine proceeds to step S69. Meanwhile, if the equalization discharge signal SGn is ON (YES at step S66), the forced discharge control unit 336 determines whether the nth terminal voltage Vn is not greater than the target voltage α2 (step S67). If the terminal voltage Vn is exceeding the target voltage α2 (NO at step S67), the routine proceeds to step S69. Meanwhile, if the terminal voltage Vn is not greater than the target voltage α2 (YES at step S67), the forced discharge control unit 336 turns OFF the equalization discharge signal SGn (turns OFF the transistor Qn), ends the discharge of the accumulator Bn, and stores the accumulator number n and end time (step S68).

At step S69, the forced discharge control unit 336 adds "1" to the variable n (step S69), and compares the variable n and the number of accumulators N (step S70).

If the variable n is not greater than the number of accumulators N (NO at step S70), the routine proceeds to step S66 in order to inspect the terminal voltage of the subsequent accumulator. Meanwhile, if the variable n is exceeding the number of accumulators N (YES at step S70), the routine proceeds to step S71.

Subsequently, at step S71, as with step S12, the forced discharge control unit 336 compares the timer value T of the timer circuit 337 with the monitoring time Tlim (step S71). If the timer value T becomes greater or equal than the monitoring time Tlim (YES at step S71), the equalization processing is subject to forced termination. Meanwhile, if the timer value T is less than the monitoring time Tlim (NO at step S71), it is determined whether there is still an equalization discharge signal that is ON; that is, whether there is an accumulator that is still being discharged (step S72).

If there is an accumulator that is still being discharged (YES at step S72), the processing of step S65 to S72 is repeated. Meanwhile, if there is no accumulator that is still being discharge (NO at step S72), the equalization processing is ended.

As a result of the foregoing processing of step S1 to S53, since the variation in the amount of change of the accumulators is identified based on a plurality of inspection methods; namely, the first preliminary identification processing, the second preliminary identification processing, and the third preliminary identification processing based on the amount of voltage change dV/dt that changes in accordance with the amount of charge and not the voltage difference between the storage element and the block as with the conventional methods, the identification accuracy of the variation in the amount of charge can be improved even in cases of using storage elements in which the change of the OCV (open voltage) is small in relation to the change of the amount of charge (SOC).

Incidentally, although a case was explained of utilizing the first preliminary identification processing, the second preliminary identification processing, and the third preliminary identification processing; that is, the voltage change immediately after the suspension of charge, amount of voltage change after a predetermined time, and prescribed amount of voltage change, it is also possible to finally identify that an imbalance of the amount of charge has occurred when two arbitrary processes among the first preliminary identification processing, the second preliminary identification processing, and the third preliminary identification processing preliminarily identify an imbalance in the amount of charge. In addition, an identification method other than the first preliminary identification processing, the second preliminary identification processing, and the third preliminary identification processing may also be combined.

Moreover, it is not necessary to comprise a plurality of preliminary identification units. For example, it is possible to comprise, as the imbalance identification unit, one among the first preliminary identification unit 332, the second preliminary identification unit 333, and the third preliminary identification unit 334, and, instead of comprising the final identification unit 335, such one preliminary identification unit may be used to turn ON the equalization Flag 4 instead of the first identification Flag 1, the second identification Flag 2, and the third identification Flag 3.

If a variation of imbalance in the amount of charge is detected, since the imbalance can be reduced based on the equalization processing, it is possible to inhibit the deterioration in the life of the electric storage device 40. The life of the power source apparatus 50 can thereby be prolonged easily.

Incidentally, the first identification value γ1, the second identification value γ2, and the third identification value γ3 that were used in the identification may also be values that have been corrected based on the amount of charge (SOC) of the electric storage device 40; preferably, they are corrected according to the amount of charge (SOC) and temperature of the electric storage device 40.

The configuration of the power source apparatus 50 shown in Fig. 1 is not limited to the foregoing configuration, and it will suffice so as long as the configuration comprises equivalent functions. For example, the control unit 330 can be realized by installing a program that realizes the various types of processing described above, and executing such program.

Additionally considered may be a mode where the charge/discharge control circuit 340 also functions as the control unit 330. In this mode, the control unit 330 installs programs for realizing the various types of processing shown in Fig. 5 to Fig. 9 in the micro computer configuring the charge/discharge control circuit 340, and executing the programs.

The determination to start the equalization of the electric storage device is not limited to the control unit 330, and such determination may be made by the charge/discharge control circuit 340 or the loading device 20 upon obtaining storage element information from the control unit 330, or based on other methods.

In addition, although the calculation cycle of dV/dt used in the identification of the foregoing embodiment was set to be at second intervals, this may be an arbitrary value, or the average value of the dV/dt value of predetermined intervals.

Moreover, as the method of seeking the voltage difference between the accumulators, although the difference between adjacent accumulators was used, it may also between the difference between the maximum voltage drop and the minimum voltage drop between the accumulators, the difference between the average voltage drop and the voltage drop of the respective accumulators, or the difference between the maximum/minimum voltage drop and the average voltage drop.

Further, although a case was explained where a fixed resistor discharge is performed up to the target voltage value while monitoring the voltage data based on the resistor discharge using a fixed resistor in the equalization processing, the equalization processing may also be performed by adjusting the discharge amount by using a variable resistor, or the equalization processing may be performed by charging up to a predetermined voltage value.

The embodiment of the present invention disclosed above is merely an example, and the present invention is not limited thereto.

Specifically, the imbalance identifying circuit according to one aspect of this invention comprises a voltage detection unit for detecting a terminal voltage in each of a plurality of accumulators, a gradient acquisition unit for performing gradient information acquisition processing of suspending the charge when the plurality of accumulators are being charged and acquiring, from each of the terminal voltages detected by the voltage detection unit during the suspension of charge, voltage gradient information showing the amount of change per predetermined time of each of the terminal voltages, and an imbalance identification unit for identifying whether an imbalance of the amount of charge in the plurality of accumulators has occurred by using a plurality of pieces of voltage gradient information corresponding to each of the terminal voltages acquired by the gradient acquisition unit.

Moreover, the imbalance identifying circuit according to another aspect of this invention comprises a step of a voltage detection unit detecting a terminal voltage in each of a plurality of accumulators, a step of a gradient acquisition unit performing gradient information acquisition processing of suspending the charge when the plurality of accumulators are being charged and acquiring, from each of the terminal voltages detected by the voltage detection unit during the suspension of charge, voltage gradient information showing the amount of change per predetermined time of each of the terminal voltages, and a step of an imbalance identification unit identifying whether an imbalance of the amount of charge in the plurality of accumulators has occurred by using a plurality of pieces of voltage gradient information corresponding to each of the terminal voltages acquired by the gradient acquisition unit.

According to the foregoing configuration, the gradient acquisition unit suspends the charge when the plurality of accumulators are being charged and acquires, from each of the terminal voltages detected by the voltage detection unit during the suspension of charge, voltage gradient information showing the amount of change per predetermined time of each of the terminal voltages. In addition, the imbalance identification unit identifies whether an imbalance of the amount of charge in the plurality of accumulators has occurred by using a plurality of pieces of voltage gradient information corresponding to each of the terminal voltages acquired by the gradient acquisition unit. In the foregoing case, even when using an accumulator in which the change in the terminal voltage is small in relation to the change in the amount of charge, as a result of identifying whether an imbalance of the amount of charge in a plurality of accumulators has occurred based on the voltage gradient information, the identification accuracy of whether an imbalance has occurred in the respective amounts of charge can be improved in comparison to a case of identifying the imbalance based on the SOC that is directly converted from the terminal voltage as with the conventional technology.

Moreover, the imbalance identification unit preferably comprises a plurality of preliminary identification units for preliminarily identifying whether an imbalance of the amount of charge in the plurality of accumulators has occurred by using a plurality of pieces of voltage gradient information acquired from the gradient acquisition unit and mutually performing different identification processing, and a final identification unit for finally identifying whether an imbalance of the amount of charge in the plurality of accumulators has occurred based on the identification result of the plurality of identification processing units.

According to this configuration, since a plurality of preliminary identification units preliminarily identifies whether an imbalance of the amount of charge in the plurality of accumulators has occurred by using a plurality of pieces of voltage gradient information acquired from the gradient acquisition unit and mutually performing different identification processing, and the final identification unit finally identifies whether an imbalance of the amount of charge in the plurality of accumulators has occurred based on the plurality of identification results based on mutually different identification processes, the identification accuracy of whether an imbalance has occurred in the respective amounts of charge can be improved in comparison to cases of identifying the imbalance of the amount of charge based on one identification processing result.

Moreover, preferably one among the plurality of preliminary identification units preliminarily identifies that the imbalance has occurred when the difference between the respective pieces of voltage gradient information acquired by the gradient acquisition unit exceeds a pre-set first identification value immediately after the suspension of charge.

According to this configuration, since one among the plurality of preliminary identification units preliminarily identifies that the imbalance has occurred on the basis of the difference between the respective pieces of voltage gradient information acquired by the gradient acquisition unit immediately after the suspension of charge, the identification time can be shortened easily.

Moreover, preferably one among the plurality of preliminary identification units preliminarily identifies that the imbalance has occurred when the difference between the respective pieces of voltage gradient information acquired by the gradient acquisition unit exceeds a pre-set second identification value after a pre-set setting time elapsed from the suspension of charge.

According to this configuration, since the voltage gradient information obtained from the respective accumulators and the amount of charge of the respective accumulators are of a correlative relationship when the pre-set setting time elapses from the suspension of charge, one among the plurality of preliminary identification units is able to preliminarily identify that the imbalance has occurred when the difference between the respective pieces of voltage gradient information acquired by the gradient acquisition unit exceeds a pre-set second identification value after a pre-set setting time elapsed from the suspension of charge.

Moreover, preferably one among the plurality of preliminary identification units preliminarily identifies that the imbalance has occurred when the difference between the elapsed time from the suspension of charge when each piece of voltage gradient information acquired from the gradient acquisition unit becomes equal to a pre-set reference value exceeds a pre-set third identification value.

According to this configuration, since the elapsed time from the suspension of charge when each piece of voltage gradient information acquired from the gradient acquisition unit becomes equal to a pre-set reference value, and the amount of charge of the respective accumulators are of a correlative relationship, one among the plurality of preliminary identification units is able to preliminarily identify that the imbalance has occurred when the difference between the elapsed time from the suspension of charge when each piece of voltage gradient information acquired from the gradient acquisition unit becomes equal to a pre-set reference value exceeds a pre-set third identification value.

Moreover, preferably the final identification unit finally identifies that the imbalance has occurred when it identifies that the imbalance is occurring to all of the plurality of preliminary identification units.

According to this configuration, since the final identification unit finally identifies that the imbalance has occurred when it identifies that the imbalance is occurring to all of the plurality of preliminary identification units, the accuracy of imbalance identification will improve, and the repetition of equalization processing caused by erroneous identification can be prevented.

Moreover, preferably the final identification unit finally identifies that the imbalance has occurred when it identifies that the imbalance is occurring to at least one among the plurality of preliminary identification units.

According to this configuration, since the final identification unit finally identifies that the imbalance has occurred when it identifies that the imbalance is occurring to at least one among the plurality of preliminary identification units, the risk of omitting the detection of imbalance can be reduced.

Moreover, preferably, with the accumulator, the amount of decrease in the terminal voltage per predetermined time after the charge is suspended becomes greater as the amount of charge increases.

According to this configuration, since the difference in the amount of charge of the respective accumulators can be obtains as the amount of decrease per predetermined time of the terminal voltage of the respective accumulators after the suspension of charge, it is easy to identify whether an imbalance of the amount of charge in the respective accumulators has occurred.

Moreover, preferably, the accumulator is a lithium ion secondary battery that uses a lithium phosphate compound having an olivine structure as a positive electrode active material.

With a lithium ion secondary battery that uses a lithium phosphate compound having an olivine structure as a positive electrode active material, since the amount of decrease in the terminal voltage that arises when the charge is suspended becomes greater as the amount of charge increases, it is preferable as the foregoing accumulator.

Moreover, preferably, the positive electrode active material is Li_{X}A_{Y}B_{Z}PO₄ (where A is at least one type among Me, Fe, Mn, Co, Ni, and Cu; B is at least one type among Mg, Ca, Sr, Sc, Y, Ti, Zr, V, Nb, Cr, Mo, W, Ag, Zn, In, Sn, and Sb, and 0 < X ≤ 1,0.9 ≤ Y ≤ 1,0 ≤ Z ≤ 0.1).

With a lithium ion secondary battery that uses Li_{X}A_{Y}B_{Z}PO₄ (where A is at least one type among Me, Fe, Mn, Co, Ni, and Cu; B is at least one type among Mg, Ca, Sr, Sc, Y, Ti, Zr, V, Nb, Cr, Mo, W, Ag, Zn, In, Sn, and Sb, and 0 < X ≤ 1 ,0.9 ≤ Y ≤ 1, 0 ≤ Z ≤ 0.1) as the positive electrode active material, since the amount of decrease in the terminal voltage that arises when the charge is suspended becomes greater as the amount of charge increases, it is preferable as the foregoing accumulator.

Moreover, preferably the gradient acquisition unit performs the gradient information acquisition processing when each of the terminal voltages detected by the voltage detection unit exceeds a pre-set reference voltage.

If the amount of charge of the respective accumulators is low, the necessity to reduce the imbalance of the amount of charge is most likely low. Thus, as a result of performing the gradient information acquisition processing when each of the terminal voltages detected by the voltage detection unit exceeds the pre-set reference voltage and it is considered that there is a certain level of amount of charge, it is possible to reduce the frequency of executing the gradient information acquisition processing. Since the charge is suspended in the gradient information acquisition processing, if the frequency of executing the gradient information acquisition processing is reduced, the opportunities that the charge is suspended will decrease. Consequently, the risk of power to be charged to the accumulator not being charged as a result of the suspension of charge and causing a loss can be reduced.

Moreover, preferably the voltage detection unit comprises a plurality of voltage measurement units for detecting a terminal voltage of each of the accumulators.

According to this configuration, since the terminal voltages of the respective accumulators can be simultaneously detected, the detection time of the terminal voltage of the respective accumulators can be shortened easily.

Moreover, preferably the voltage detection unit comprises one voltage measurement unit for detecting a terminal voltage of each of the accumulators, and switching unit for switching the connection relationship between the voltage measurement unit and each of the accumulators and causing the voltage measurement unit to detect a terminal voltage of each of the accumulators.

According to this configuration, since only one voltage measurement unit is required to detect the terminal voltage of the respective accumulators, space-saving and cost-saving can be easily achieved.

In addition, the power source apparatus according to another aspect of the present invention comprising the foregoing imbalance identifying circuit, the plurality of accumulators, a discharge unit for causing the plurality of accumulators to respectively discharge, and a forced discharge control unit for causing each of the accumulators to be discharged by the discharge unit until each of the terminal voltages detected by the voltage detection unit falls below a pre-set target voltage when the imbalance identification unit identifies that the imbalance has occurred.

According to this configuration, when an imbalance of the amount of charge in the respective accumulators is detected by the imbalance identifying circuit, the discharge unit reduces the imbalance by discharging the respective terminal voltages of the respective accumulators until they fall below the target voltage.

### Industrial Applicability

The imbalance identifying circuit, the power source apparatus using such circuit, and the imbalance identification method according to an aspect of the present invention are useful as a power source or device that performs equalization processing of electric storage devices, and possess industrial applicability.

## Claims

1. An imbalance identifying circuit, comprising:
a voltage detection unit for detecting a terminal voltage in each of a plurality of accumulators;
a gradient acquisition unit for performing gradient information acquisition processing of suspending charge when the plurality of accumulators are being charged and acquiring, from each of the terminal voltages detected by the voltage detection unit during the suspension of charge, voltage gradient information showing an amount of change per predetermined time of each of the terminal voltages; and
an imbalance identification unit for identifying whether an imbalance of the amount of charge in the plurality of accumulators has occurred by using a plurality of pieces of voltage gradient information corresponding to each of the terminal voltages acquired by the gradient acquisition unit.

2. The imbalance identifying circuit according to claim 1, wherein
the imbalance identification unit comprises:
a plurality of preliminary identification units for preliminarily identifying whether an imbalance of the amount of charge in the plurality of accumulators has occurred by using a plurality of pieces of voltage gradient information acquired from the gradient acquisition unit and performing mutually different identification processing; and
a final identification unit for finally identifying whether an imbalance of the amount of charge in the plurality of accumulators has occurred based on identification results of the plurality of identification processing units.

3. The imbalance identifying circuit according to claim 2, wherein one among the plurality of preliminary identification units preliminarily identifies that the imbalance has occurred when a difference between the pieces of voltage gradient information acquired by the gradient acquisition unit exceeds a pre-set first identification value immediately after the suspension of charge.

4. The imbalance identifying circuit according to claim 2 or claim 3, wherein one among the plurality of preliminary identification units preliminarily identifies that the imbalance has occurred when the difference between the respective pieces of voltage gradient information acquired by the gradient acquisition unit exceeds a pre-set second identification value after elapse of a pre-set setting time from the suspension of charge.

5. The imbalance identifying circuit according to any one of claims 2 to 4, wherein one among the plurality of preliminary identification units preliminarily identifies that the imbalance has occurred when a difference between the elapsed times from the suspension of charge, when each piece of voltage gradient information acquired from the gradient acquisition unit becomes equal to a pre-set reference value, exceeds a pre-set third identification value.

6. The imbalance identifying circuit according to any one of claims 2 to 5, wherein the final identification unit finally identifies that the imbalance has occurred when identification is made that the imbalance is occurring to all of the plurality of preliminary identification units.

7. The imbalance identifying circuit according to any one of claims 2 to 5, wherein the final identification unit finally identifies that the imbalance has occurred when identification is made that the imbalance is occurring to at least one of the plurality of preliminary identification units.

8. The imbalance identifying circuit according to any one of claims 1 to 7, wherein, with the accumulator, the amount of decrease in the terminal voltage per predetermined time after the charge is suspended becomes greater as the amount of charge increases.

9. The imbalance identifying circuit according to claim 8, wherein the accumulator is a lithium ion secondary battery that uses, as a positive electrode active material, a lithium phosphate compound having an olivine structure.

10. The imbalance identifying circuit according to claim 9, wherein the positive electrode active material is Li_{X}A_{Y}B_{Z}PO₄ (where A is at least one type selected from Me, Fe, Mn, Co, Ni, and Cu; B is at least one type selected from Mg, Ca, Sr, Sc, Y, Ti, Zr, V, Nb, Cr, Mo, W, Ag, Zn, In, Sn, and Sb, and 0 < X ≤ 1, 0.9 ≤ Y ≤ 1, 0 ≤ Z ≤ 0.1).

11. The imbalance identifying circuit according to any one of claims 1 to 10, wherein the gradient acquisition unit performs the gradient information acquisition processing when each of the terminal voltages detected by the voltage detection unit exceeds a pre-set reference voltage.

12. The imbalance identifying circuit according to any one of claims 1 to 11,
wherein the voltage detection unit comprises a plurality of voltage measurement units for detecting a terminal voltage of each of the accumulators.

13. The imbalance identifying circuit according to any one of claims 1 to 11, wherein the voltage detection unit comprises:
one voltage measurement unit for detecting a terminal voltage of each of the accumulators; and
a switching unit for switching a connection relationship between the voltage measurement unit and each of the accumulators and causing the voltage measurement unit to detect a terminal voltage of each of the accumulators.

14. A power source apparatus, comprising:
the imbalance identifying circuit according to any one of claims 1 to 13;
the plurality of accumulators;
a discharge unit for causing the plurality of accumulators to discharge respectively;
and
a forced discharge control unit for causing each of the accumulators to be discharged by the discharge unit until each of terminal voltages detected by the voltage detection unit becomes not higher than a pre-set target voltage when the imbalance identification unit identifies that the imbalance has occurred.

15. An imbalance identification method, comprising:
a step of detecting, by a voltage detection unit, a terminal voltage in each of a plurality of accumulators;
a step of performing, by a gradient acquisition unit, gradient information acquisition processing of suspending charge when the plurality of accumulators are being charged and acquiring, from each of the terminal voltages detected by the voltage detection unit during the suspension of charge, voltage gradient information showing an amount of change per predetermined time of each of the terminal voltages; and
a step of identifying, by an imbalance identification unit, whether an imbalance of the amount of charge in the plurality of accumulators has occurred by using a plurality of pieces of voltage gradient information corresponding to each of the terminal voltages acquired by the gradient acquisition unit.
